# EUROPEAN PATENT APPLICATION

(11) **EP 3 372 554 A1**
(43) Date of publication of application: **12.09.2018**
(21) Application number: 17160364.0
(22) Date of filing: 10.03.2017
(51) Int. Cl.: C01B 11/02, B01J 7/02

(54) **CHLORINE DIOXIDE GENERATION**

(71) Applicant: International Dioxcide Inc., North Kingstown, RI 02852 (US)
(72) Inventor: NEIL, Andre, Warwick, RI 02889 (US); BELISLE, Aimee, Moosup, CT 06354 (US); BELISLE, Randy, Moosup, CT 06354 (US); Hulsman, William, Warwick, RI 02886 (US)
(74) Representative: Murgitroyd & Company

(57) **Abstract**

Devices and methods for safely using acid/chlorite ClO₂ generator chemistry for water treatment, whereby a check valve prevents chemical draw unless there is suitable water volume in the flow chamber for dilution, are described. The check valve can also allow for direct venting from the reaction chamber to the flow chamber in the event of elevated pressure in the reaction chamber.

## Description

### SUMMARY

In an embodiment, a device may comprise a reaction chamber, a flow chamber operably connected to the reaction chamber, and a check valve open to the reaction chamber and the flow chamber. The check valve may respond to fluid levels in the flow chamber, closing the valve and sealing the vacuum chamber when the fluid is sufficiently high, and opening the valve and releasing the pressure when the flow chamber is inadequately filled.

In an embodiment, a method may comprise closing a check valve between a flow chamber and a reaction chamber, creating a vacuum in the reaction chamber, and producing chlorine dioxide in the reaction chamber.

Further embodiments of the instant disclosure are described herein.

### BRIEF DESCRIPTION OF THE DRAWINGS

FIG. 1 shows a schematic for a two-part reactor assembly with a reaction chamber upstream of the eductor. The floating ball check valve links the reaction chamber to the flow chamber.
FIG. 2 shows an embodiment of a two-part reactor assembly in accordance with the present disclosure.
FIG. 3 shows an alternative embodiment of a two-part reactor assembly in accordance with the present disclosure.
FIG. 4 shows an alternative embodiment of a two-part reactor assembly in accordance with the present disclosure.
FIG. 5 shows an alternative embodiment of a two-part reactor assembly in accordance with the present disclosure.

### DETAILED DESCRIPTION

The above summary of the present invention is not intended to describe each illustrated embodiment or every possible implementation of the present invention. The detailed description, which follows, particularly exemplifies these embodiments.

Before the present compositions and methods are described, it is to be understood that they are not limited to the particular compositions, methodologies or protocols described, as these may vary. It is also to be understood that the terminology used in the description is for the purpose of describing the particular versions or embodiments only, and is not intended to limit their scope, which will be limited only by the appended claims.

It must also be noted that as used herein and in the appended claims, the singular forms "a," "an," and "the" include plural reference unless the context clearly dictates otherwise. Unless defined otherwise, all technical and scientific terms used herein have the same meanings as commonly understood by one of ordinary skill in the art. Although any methods and materials similar or equivalent to those described herein can be used in the practice or testing of embodiments disclosed, the preferred methods, devices, and materials are now described.

Chlorine dioxide (ClO₂) is a potent oxidizing agent that is commonly used as a disinfectant during water treatment. ClO₂ is an unstable liquid that decomposes over time to form an explosive vapor, which can ignite at concentrations greater than 10% by volume. Therefore, it cannot be shipped. Aqueous solutions of ClO₂ generated at an application site can be safely handled and applied as long as decomposition conditions do not develop.

Chlorine dioxide is generally produced from sodium chlorite (NaClO₂) and an acid, usually hydrochloric acid (HCl), which can be expressed by the chemical equation:

5NaClO₂ + 4HCl → 4ClO₂ + 5NaCl + 2H₂O.

In most systems, about 80% of the sodium chlorite introduced into the system is converted to ClO₂ in excess acid, which is required to drive the reaction to completion.

Conventional acid-chlorite ("AC") ClO₂ generators use pumps or eductors to provide reactant flow and mix reactants in a preliminary reaction chamber. An outlet dilutes the ClO₂ into a water stream for either short-term storage or direct process application. Eductor-based systems provide safe operation because the reactor is under vacuum while ClO₂ is generated. The combined vacuum and flow dynamics of the eductor prevent explosive levels of ClO₂ vapor by rapidly diluting ClO₂ into the motive water supply. A high concentration of ClO₂ is not allowed to develop and persist in the reaction zone at elevated pressure. The motive water driving the function of the eductor also promotes immediate dilution, which prevents high concentrations of ClO₂ from persisting or collecting. In some embodiments, the motive water supply may be cycled between an "on" state and an "off" state to control ClO₂ generation. Automated valves on each of the reactant precursor feed lines close to halt reactor operation when suitable motive water flow is not provided or process water flow is not detected.

Standard eductor operations require enough motive water flow to provide the suction force for the chemical feeds, but safe operational guidelines limit the final stream concentration to 3,000 ppm. However, ClO₂ concentration in the AC reaction chamber can greatly exceed this value, especially when acid is fed near stoichiometric ratio to chlorite and the reactor is not purged when the system is turned off. Higher reactant precursor concentrations will also elevate the risk associated with these reactors; therefore, 7.5% sodium chlorite is typically paired with 10% HCl solution for these systems. Larger ClO₂ generation capacity requires proportionately larger reaction chamber volumes, and the associated dangers are also increased. Thus, AC systems are generally limited to lower production levels, such as 50 lb/day ClO₂ or lower.

While the AC generator chemistry is common in industry and has many system design variations, most designs simply pump or educt the precursor chemical feeds into an isolated reaction chamber that then feeds into an application point. In some cases, the reaction chamber is situated fully or partially within the process flow stream, but these systems do not have any mechanisms to prevent ClO₂ generation in the event of low to no process flow, or to respond to a high-pressure event in the reaction chamber. Due to the desire for low-cost systems, they have limited safety interlocks and limited ClO₂ generation capacity.

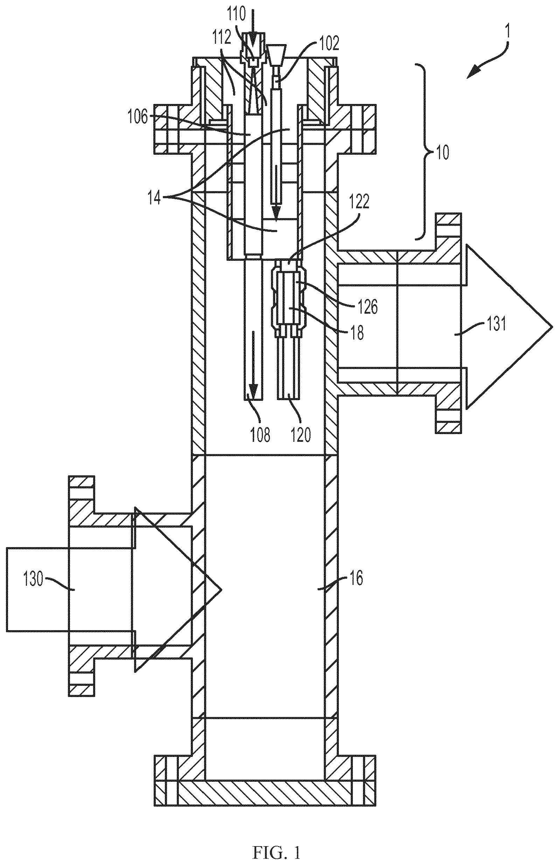

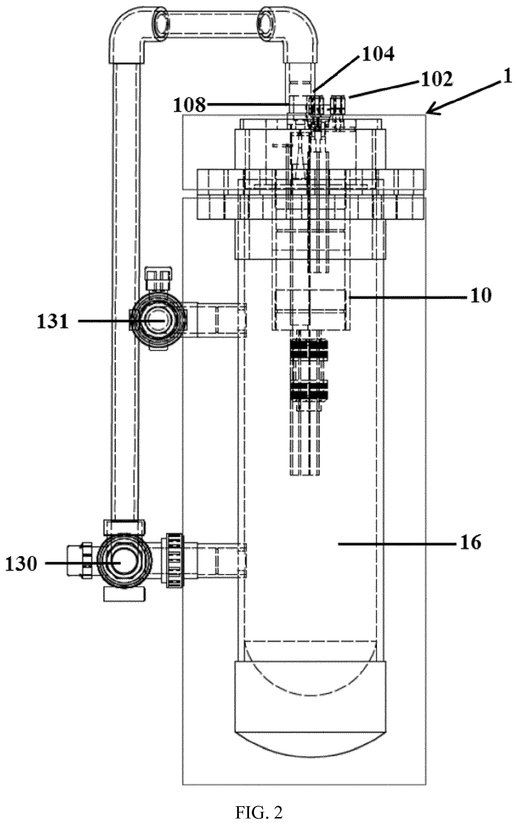

Various embodiments of the invention are directed to an AC generator device and methods for using the device to provide in-line ClO₂ generation for water treatment. FIG. 1 and FIG. 2 illustrate embodiments of a device **1,** including a reaction chamber **10** having a vacuum chamber **14.** During operation, the reaction chamber **10** may be held under vacuum. An acid feed **102,** a chlorite feed **104,** and a motive water conduit **106** may open into the reaction chamber **10** to provide the reactants for production of ClO₂. The acid feed **102** and the chlorite feed **104** may be mixed in the reaction chamber **10.** An eductor **108** may be attached to the reaction chamber **10** and open into a flow chamber **16** to introduce ClO₂ produced in the reaction chamber **10** into treatment water passing through the flow chamber **16.** In certain embodiments, the reaction chamber **10** and eductor **108** may be substantially submerged during production of ClO₂ by water from the flow chamber **16,** and in particular embodiments, the reaction chamber 10 and eductor **108** may be completely submerged in water from the flow chamber **16.** In some embodiments, the reaction chamber **10** may comprise a material such as, for example, a baffling material or a packing material. In some embodiments, such a material may promote sufficient mixing and residence time to maximize conversion efficiency to ClO₂.

The motive water conduit **106** may include a nozzle **110** and a window **112** opening into the vacuum chamber **14** to allow water flowing through the motive water conduit **106** to create a vacuum in the reaction chamber **10** as water is introduced into the flow chamber **16.** In some embodiments, the device may further include a check valve **18** opening to the flow chamber **16** to relieve excess pressure during operation of the device **1.**

In particular embodiments, the check valve **18** may respond to fluid levels in the flow chamber **16,** closing the valve and sealing the reaction chamber **10** when the fluid level is sufficiently high to produce ClO₂ and opening the valve and relieving the vacuum when the flow chamber **16** is inadequately filled. In some embodiments, the fluid may be water. In certain embodiments, the check valve **18** may act as an emergency vent if excessive pressure is built up in the reaction chamber **10** by opening to the flow chamber **16,** allowing reactor contents to empty into the flow chamber **16** and be safely contained. In some embodiments, the reaction chamber **10** may be configured to separate from the device and release its contents if a high-pressure event occurs that is beyond the venting capability of the valve **18.**

Such water level responsive check valves may be configured in any way. For example, in some embodiments as pictured in FIG. 1, the check valve **18** may include a float chamber **120,** which may be disposed within the flow chamber **16.** The float chamber **120** may open to the vacuum chamber **14** through a vacuum chamber orifice **122** and open to the flow chamber **16** through a flow chamber orifice, such that water from the flow chamber **16** may enter the float chamber **120** as water levels within the float chamber **120** rise. A floating ball **126** may be retained within a portion of the float chamber **120** and may float atop water, contacting and sealing the vacuum chamber orifice **122** when the flow chamber **16** is filled with water, thereby sealing the reaction chamber **10** and allowing the motive water conduit **106** to produce a vacuum in the reaction chamber **10.** In other embodiments, the check valve may be actuated by a water level sensor located in the flow chamber (not depicted). In such embodiments, the valve may be located on any surface of the reaction chamber. In some embodiments, the valve may comprise one or more of a check valve, a ball check valve, a gasket, a flexible gasket, or combinations thereof. In such embodiments, the gasket may be a flexible gasket to allow the release of contents into the flow chamber.

The reaction chamber may be connected directly to a treatment water flow as illustrated in FIG. 1, having a treatment water flow inlet **130** and a treatment water flow outlet **131.** In such embodiments, the ClO₂ produced in the reaction chamber **10** is introduced into the treatment water flow directly. In other embodiments, the reaction chamber **10** may be an accessory to the main treatment water flow. For example, the reaction chamber **10** may be fluidly connected to a treatment water main such that a portion of the water flowing through the main is transported to the reaction chamber **10.** The ClO₂ produced in the reaction chamber **10** may be diluted, and then transported through an outlet into the treatment water main where the diluted ClO₂ treats the treatment water.

In some embodiments, a device as described herein may further include one or more control systems. Such control systems may be configured to automate the chemical feed rate of ClO₂ and may employ sensors sensitive to, for example, ORP, pH, and/or ClO₂ concentration or other sensors. In some embodiments, a control sensor may be used to turn the device, or a system therein, "on" or "off" as necessary. In addition, in some embodiments one or more flow rate control valves may be used on the treatment water flow inlet line and/or the treatment water flow outlet line to allow for variable control of a ClO₂ feed rate into the process stream being treated.

In some embodiments, the components and chambers described herein may be modular in nature, such that they may be individually removed, repaired, or replaced. In additional embodiments, the device described herein may comprise one or more of each of the components and chambers. In other embodiments, the range and flow of ClO₂ production may be modified by changing the eductor, increasing or decreasing the treatment and water flow inlet and outlet, and any other modification apparent to one of skill in the art.

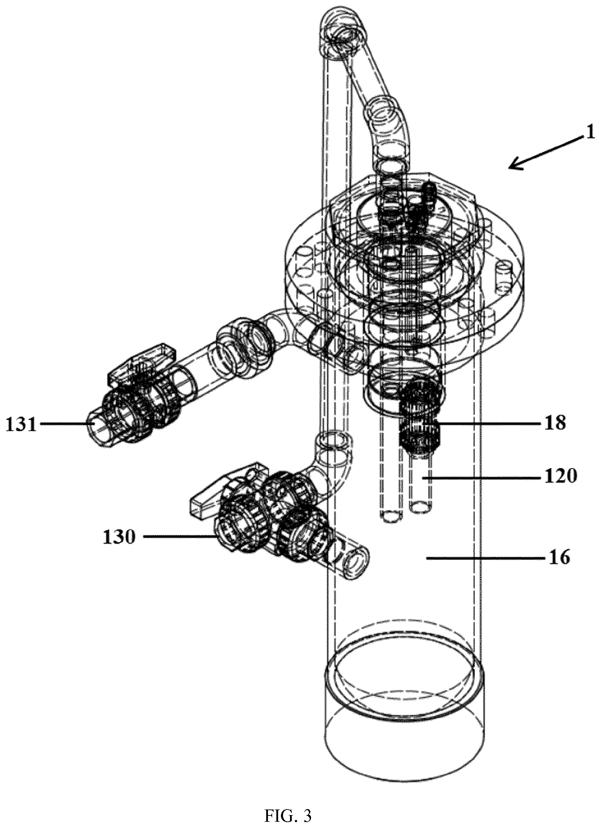

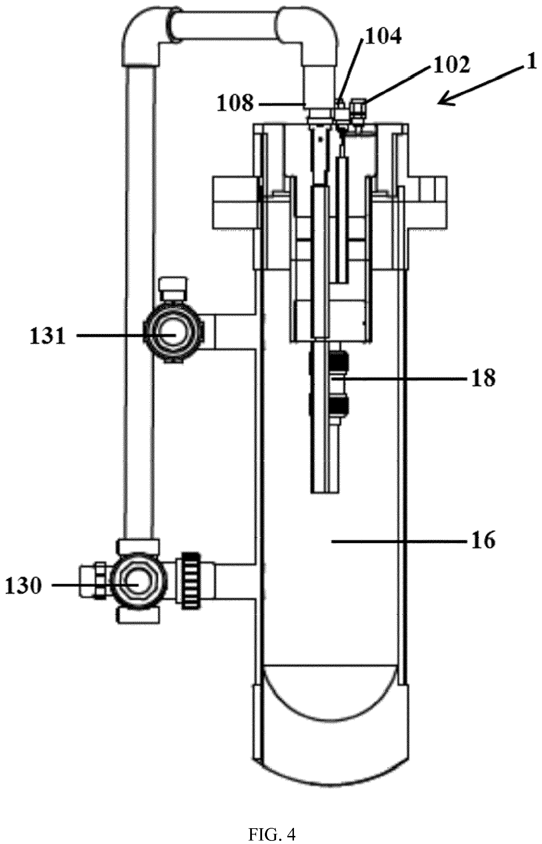

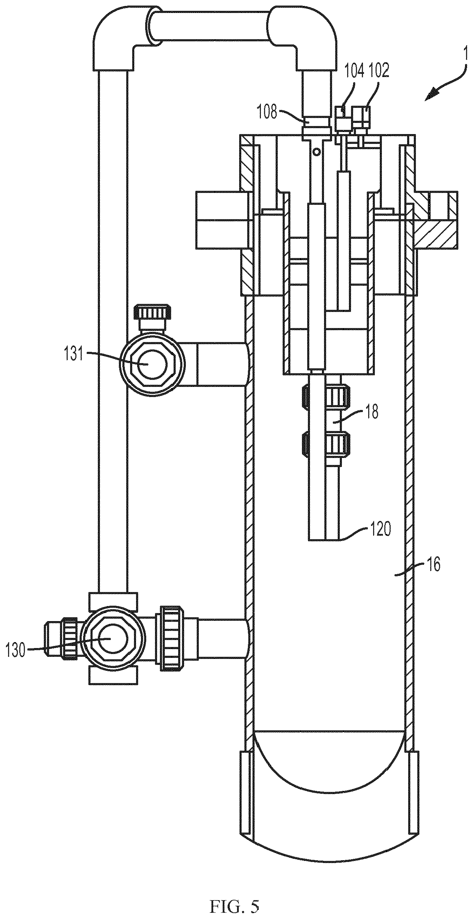

The device of embodiments described above provides enhanced safety features. For example, submerging the reaction chamber **10** and eductor **108** in treatment water insulates the reaction chamber **10.** A vertically oriented reactor assembly allows a check valve having a floating ball **126** to prevent chemical eduction under inadequate treatment water flow. Thus, unless there is sufficient process water in the flow chamber to close the ball check valve, the eductor **108** will not hold a vacuum and would not draw precursor chemicals to make ClO₂. Incorporating the eductor flow into the main process flow ensures that ClO₂ generation will only take place where there is also suitable dilution process water for the operation. This prevents potential ClO₂ accumulation or dead-heading in a closed-loop system. Additionally, eduction prevents pressurization of any potential ClO₂ gas in the reaction zone and avoids the use of pumps for precursor chemical feeds. Further, immediate ClO₂ dilution after exiting the reaction chamber into the water flow minimizes the risks of concentrated ClO₂ exposure. Moreover, a compact design facilitates maintenance, repairs, and overall operation of the device disclosed herein. Furthermore, such a device may reduce or eliminate the need to add water to the process stream during use. FIGS. 2-5 illustrate alternative embodiments of a two-part reactor assembly as described herein.

Further embodiments are directed to methods for treating water with ClO₂. Such methods may include nducing a vacuum when flow water reaches a level and producing ClO₂ under the vacuum. In some embodiments, the step of inducing a vacuum may be carried out by closing a check valve between a flow chamber and a reaction chamber and producing a vacuum in the reaction chamber. Closing a check valve can be carried out by any mechanism. For example, a mechanical or electronic valve that is configured to close upon contact of the valve or a sensor with water can be used. In other embodiments, the check valve can include a float that seals an orifice in the reaction chamber when the treatment water level reaches the reaction chamber. In some embodiments, the seal formed by the check valve may become progressively tighter as an increasing vacuum is applied to or produced by the reaction chamber. Producing a vacuum in the reaction chamber can be carried out by any mechanism. For example, producing a vacuum can be carried out using a pump, and in certain embodiments, producing a vacuum can be carried out by Venturi effect, using the motive force of water entering the reaction chamber.

Producing ClO₂ can be carried out in a variety of ways. In some embodiments, the method may include filling at least a portion of the reaction chamber with water and drawing reactants into the reaction chamber. The step of filling at least a portion of the reaction chamber can be carried out by transporting a portion of the treatment water to the reaction chamber, and in some embodiments, the water used for filling at least a portion of the reaction chamber may include the water used to produce a vacuum by Venturi effect. The step of drawing reactants into the reaction chamber can be carried out by any mechanism. For example, drawing reactants can be carried out using pumps which provide reactant flow, or in certain embodiments, drawing a reactant into the reaction chamber can be carried out as a result of inducing a vacuum. In various embodiments, the reactants may include, for example, sodium chlorite (NaClO₂) and hydrochloric acid (HCl).

The method may further include combining the reactants with water to produce ClO₂. In some embodiments, combining the reactants with water can be carried out innately upon filling at least a portion of the reaction chamber with water and drawing reactants into the reaction chamber. In other embodiments, the reaction chamber may include a mixing device, such as a mechanical stirrer or water jets, to mix the reactants and water.

After producing ClO₂, the method of various embodiments may include transporting the ClO₂ to the treatment water. In some embodiments, the transporting can be carried out by pumping the ClO₂-containing water from the reaction chamber to the treatment water. In other embodiments, transporting can be carried out by siphoning ClO₂-containing water into treatment water through an eductor immersed in the treatment water.

### EXAMPLES

Using 7.5wt% NaClO₂ and 15wt% HCl precursor solutions, maximum and minimum ClO₂ production flows were determined according to inlet pressure, outlet pressure, motive water flow rate, and process water flow. The system hardware was fixed although manual flow rate control valves were used for the precursors to vary the PPD ClO₂ generated. The system achieved 6 - 36 PPD ClO₂ production rates. After verifying acceptable conversion efficiency in the system, several scenarios were tested to validate the safety features of the device, as further described below.

### Example 1: Process flow interruption

After the device had produced ClO₂ for 30 minutes, the process water was turned off to simulate a system that was shut down before it had time to be purged or emptied. With the process flow supply interrupted, the flow to the eductor was also interrupted, and the vacuum on the reaction chamber halted. At this point, the check valve opened and allowed the contents of the reaction chamber to slowly drain into the flow chamber. This safety measure minimizes the risk of ClO₂ vapors building up in an enclosed reaction chamber volume.

### Example 2: Low acid flow and extended dwell time

In a more extreme set of circumstances, the acid feed was lowered to simulate a system that had not been properly configured to correct precursor feed ratios. When the acid feed is low, the ClO₂ concentration within the reaction chamber can be considerably higher if there is sufficient dwell time to convert the chlorite to ClO₂. In a shutdown scenario, the ClO₂ can continue to form over time after shutdown. Under these conditions, the check valve also sufficiently drained and diluted the reactor contents into the flow chamber before any decomposition events occurred.

### Example 3: Pressure event within the reaction chamber

A test was conducted in which water was forced through the acid feed at a rate of 310 GPD while the pressure of the reaction chamber was monitored. With the check valve in place, the maximum pressure achieved in the flow chamber was 1.2 psig. The check valve was then replaced by a plug to prevent venting, and the test was repeated. Applying the same flow rate of 310 GPD, the flow chamber pressure increased to 4.4 psig, which is a nearly 4 times greater pressure differential between the reaction chamber and the flow chamber. In these tests, the flow chamber was being emptied to an open container, and did not have significant back pressure.

The iteration without the check valve is similar to traditionally constructed AC ClO₂ generators, in which the flow chamber consists of only two feed inlets and a single outlet being diluted into the process water supply. Therefore, in the case of a decomposition event within the flow chamber, the modified design would release its contents much more quickly, and experience internal shock pressures much lower than a traditionally designed AC reactor.

### Example 4: Insufficiently filled flow chamber

In this experiment, we attempted to start the ClO₂ generator without having sufficient fluid level in the flow chamber. In this case, no chemical flow occurred, because no vacuum could be maintained within the device. Without a properly filled flow chamber, the check valve did not seal and did not allow a vacuum to be created within the reaction chamber.

### Example 5: Reaction chamber drainage

The check valve also allows for faster and easier drainage when preparing the device or system for maintenance or inspection. Upon draining the flow chamber, the check valve opens to allow for faster drainage of the reaction chamber contents. Without the check valve, flow out of the reaction chamber would slow to a trickle, or may even require complete disassembly to empty its contents.

While the present disclosure has been illustrated by the description of exemplary embodiments thereof, and while the embodiments have been described in certain detail, it is not the intention of the Applicants to restrict or in any way limit the scope of the appended claims to such detail. Additional advantages and modifications will readily appear to those skilled in the art. Therefore, the disclosure in its broader aspects is not limited to any of the specific details, representative devices and methods, and/or illustrative examples shown and described. Accordingly, departures may be made from such details without departing from the spirit or scope of the Applicant's general inventive concept.

## Claims

1. A device comprising:
a reaction chamber;
a flow chamber operably connected to the reaction chamber; and
a valve connecting the reaction chamber to the flow chamber, wherein the valve responds to a fluid level in the flow chamber, closing the valve and sealing the reaction chamber when the fluid level is sufficiently high and opening the valve and relieving pressure in the reaction chamber when the fluid level is inadequate.

2. The device of claim 1, wherein the reaction chamber comprises a material selected from the group consisting of a baffling material, a packing material, and combinations thereof.

3. The device of claim 1, wherein the valve comprises a check valve.

4. The device of claim 1, wherein the valve comprises a ball check valve.

5. The device of claim 1, wherein the valve comprises a gasket.

6. The device of claim 5, wherein the gasket is a flexible gasket.

7. The device of claim 1, further comprising a control system in communication with at least a portion of the device.

8. A method comprising:
closing a valve between a flow chamber and a reaction chamber;
creating a vacuum in the reaction chamber; and
producing a chemical in the reaction chamber.

9. The method of claim 8, wherein the chemical is chlorine dioxide.

10. The method of claim 8, wherein closing the valve between the flow chamber and the reaction chamber comprises creating a seal between the flow chamber and the reaction chamber.

11. The method of claim 10, wherein a strength of the seal increases as a strength of the vacuum increases.

12. The method of claim 8, wherein the valve is a ball check valve.

13. The method of claim 8, further comprising opening the valve to release excess pressure from the reaction chamber.
